(19) Europäisches Patentamt
European Patent Office
Office européen des brevets

(11) Veröffentlichungsnummer: **0 449 063 A2**

(12) # EUROPÄISCHE PATENTANMELDUNG

(21) Anmeldenummer: **91104078.0**

(22) Anmeldetag: **16.03.91**

(51) Int. Cl.5: **C08J 7/04**, C08K 5/00, //C08L81:06

(30) Priorität: **22.03.90 DE 4009208**

(43) Veröffentlichungstag der Anmeldung:
**02.10.91 Patentblatt 91/40**

(84) Benannte Vertragsstaaten:
**BE CH DE FR GB IT LI NL**

(71) Anmelder: **BASF Aktiengesellschaft**
**Carl-Bosch-Strasse 38**
**W-6700 Ludwigshafen(DE)**

(72) Erfinder: **Matthies, Hans Georg, Dr.**
**Homburger Strasse 2**
**W.-6700 Ludwigshafen(DE)**
Erfinder: **Eichler, Rainer**
**Werrystrasse 2**
**W-6715 Lambsheim(DE)**
Erfinder: **Franz, Andrea**
**Haselstrasse 41**
**W-6750 Kaiserslautern(DE)**

(54) **Geformte Gebilde aus aromatischen Polyethersulfonen, die gegen UV-Strahlung stabilisiert sind und ein Verfahren zu deren Herstellung.**

(57) Geformte Gebilde aus aromatischen Polyethersulfonen, die gegen UV-Strahlung stabilisiert sind, dadurch gekennzeichnet, daß sie mit mindestens einem filmbildenden Polymeren mit einem Gehalt an mindestens einem filmbildenden Polymeren gelösten und/oder dispergiertem UV-Strahlung absorbierenden Mittel beschichtet sind.

EP 0 449 063 A2

Polyethersulfone, wie sie beispielsweise aus DE-B 14 45 806 bekannt sind, haben einen hohen Schmelzpunkt, z.B. 350 °C und höher und eignen sich zur Herstellung von hochtemperaturbeständigen Gegenständen.

Zur Wahrung der hervorragenden Gebrauchseigenschaften bedürfen sie jedoch der Stabilisierung gegenüber UV-Strahlung. Aufgrund des hohen Schmelzpunktes und der dadurch bedingten hohen Verarbeitungstemperaturen hat es sich als sehr schwierig herausgestellt, UV-Stabilisatoren direkt der Schmelze des Polyethersulfons zuzufügen, da UV-Stabilisatoren bei den erforderlichen hohen Temperaturen zur Zersetzung neigen.

Aus der US-PS 4,089,996 ist bekannt, daß man die Oberfläche von Folien aus polymeren aromatischen Sulfonen mit einem Gemisch aus Zinn- und Titanverbindungen behandelt, um eine Stabilisierung gegenüber UV-Strahlung zu erzielen. Abgesehen davon, daß diese Arbeitsweise sehr aufwendig ist, treten mit Schwermetallverbindungen auch ökologische Probleme auf.

Nach einem aus der US-PS 4,698,267 beschriebenen Verfahren wurde auch schon versucht, poröse Hohlfasern aus Polyethersulfonen mit olefinisch ungesättigten Polymeren, die Trimethylsilylgruppen enthalten, zu beschichten. Solche Polymeren sind jedoch nicht leicht zugänglich.

Ferner ist aus WO 86/05499 bekannt, Oberflächen von Polymeren wie Polyethersulfonen mit Thiocyano- oder Isothiocyanoradikale bildenden Stoffen zu behandeln, um die Oberfläche zu modifizieren und unter anderem eine verbesserte UV-Stabilität zu erreichen. Die hierbei verwendeten Ausgangsstoffe und die angewandte Arbeitsweise sind für eine technische Anwendung weniger geeignet.

Es war deshalb die technische Aufgabe gestellt, geformte Gebilde aus aromatischen Polyethersulfonen zur Verfügung zu stellen, die wirksam gegen UV-Strahlung stabilisiert sind, eine Schädigung der Stabilisatoren zu vermeiden und ein wenig aufwendiges Verfahrung zur Stabilisierung zur Verfügung zu stellen.

Diese Aufgabe wird gelöst durch geformte Gebilde aus aromatischen Polyethersulfonen, die gegen UV-Strahlung stabilisiert sind, dadurch gekennzeichnet, daß sie mit mindestens einem filmbildenden Polymeren mit einem Gehalt an mindestens einem in dem filmbildenden Polymeren gelösten und/oder dispergierten UV-Strahlung absorbierenden Mittel beschichtet sind.

Ferner ist ein Gegenstand der Erfindung ein Verfahren zur Herstellung von geformeten Gebilden aus aromatischen Polyethersulfonen, die gegen UV-Strahlung stabilisiert sind, wobei man geformte Gebilde aus aromatischen Polyethersulfonen mit einer gegenüber aromatischen Polyethersulfonen indifferenten Lösung oder Dispersion mindestens eines filmbildenden Polymeren, die mindestens ein UV-Strahlungabsorbierendes Mittel gelöst und/oder dispergiert enthält, beschichtet und das Lösungs- und/oder Dispergiermittel bei erhöhter Temperatur unter Ausbildung eines Polymerfilmes entfernt.

Die erfindungsgemäßen geformten Gebilde aus aromatischen Polyethersulfonen, die gegen UV-Strahlung stabilisiert sind, haben den Vorteil, daß sowohl der aufgebrachte Polymerfilm als auch der darin gelöste oder dispergierte UV-Stabilisator ultraviolette Strahlen absorbieren. Das neue Verfahren hat den Vorteil, daß es gestattet, mehrere Lagen aus verschiedenen Polymeren und/oder verschiedenen UV-absorbierenden Mitteln auf die geformeten Gebilde aus aromatischen Polyethersulfonen aufzubringen und so zu einer UV-Strahlung absorbierenden Schicht zu vereinen. Ferner hat das neue Verfahren den Vorteil, daß es technisch wenig aufwendig ist und die UV-stabilisierenden Mittel thermisch wenig belastet werden. Schließlich hat das neue Verfahren den Vorteil, daß die UV-stabilisierende Schicht auf den geformten Gebilden aus Polyethersulfonen gut haftet.

Bevorzugte aromatische Polyethersulfone sind aufgebaut aus wiederkehrenden Einheiten der allgemeinen Formel I

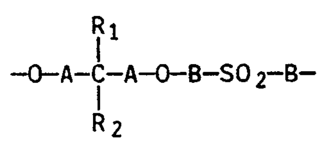

I

in der A und B gleich oder verschieden sein können und jeweils einen 1,4-Phenylenrest oder 1,7-Naphthylenrest bezeichnen und B auch einen 4,4'-Biphenylenrest bezeichnen kann und $R_1$ und $R_2$ gleich oder verschieden sein können und jeweils einen Alkylrest mit 1 bis 4 Kohlenstoffatomen bedeuten und/oder wiederkehrende Einheiten der allgemeinen Formel II

$-O-X-SO_2-X-$ II

in der X einen 1 4-Phenylenrest, 4,4'-Biphenylenrest oder einen 1,7-Naphthylenrest bedeutet. Beispiele für

wiederkehrende Einheiten der Formel I und II sind beispielsweise solche der Formeln III bis V

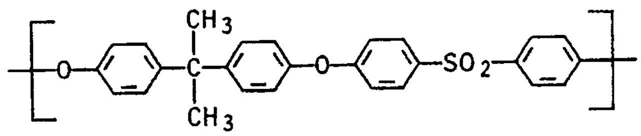

III

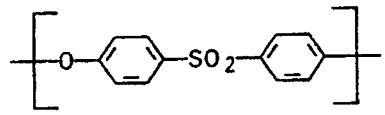

IV

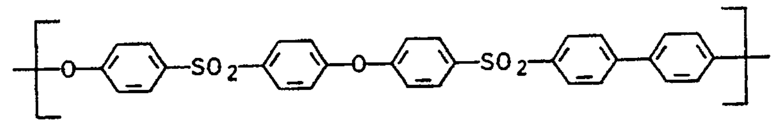

V

Die Polyarylethersulfone bestehen somit im wesentlichen aus wiederkehrenden Einheiten der Formel I aus Polymeren, mit wiederkehrenden Einheiten der Formel II aus Copolymeren, mit wiederkehrenden Einheiten der Formel I und II, ferner aus Gemischen solcher Polymeren.

Die aromatischen Polyethersulfone haben vorteilhaft eine relative Lösungsviskosität von 1,4 bis 2,0. Die Herstellung solcher aromatischen Polyethersulfone wird beispielsweise beschrieben in der DE-AS 14 45 806.

Unter geformten Gebilden sind in der Regel aus der Schmelze geformte Gebilde, insbesondere Folien, Fäden und Fasern, sowie daraus hergestellte Gewebe, Gewirke oder Vliese zu verstehen. Besonders bevorzugt sind aus der Schmelze geformte Fäden und Fasern, die verstreckt sind z.B. auf das 1,2 bis 10fache.

Die geformten Gebilde aus aromatischen Polyethersulfonen sind mit mindestens einem filmbildenden Polymeren mit einem Gehalt an mindestens einem in dem filmbildenden Polymeren gelösten und/oder dispergierten UV-Strahlung absorbierenden Mittel beschichtet.

Geeignete filmbildende Polymere sind beispielsweise Polyvinylalkohol, Polyvinylacetat oder -propionat, Polyvinylpyrrolidon, Polymerisate aus (Meth)acrylsäure $C_1$-$C_4$-Alkylestern oder Copolymerisate aus solchen (Meth)acrylsäure $C_1$-$C_4$-Alkylestern und aromatischen Vinylverbindungen wie Styrol.

Besonders bevorzugt sind als filmbildende Polymere Polyacrylsäureester und deren Copolymere, z.B. Copolymere mit Styrol sowie Copolymere aus Butadien und Styrol.

Geeignete UV-Strahlung absorbierende Mittel sind z. B. sterisch gehinderte Phenole wie 5-Methyl-3-dodecylphenole, Di-tert.-amylphenol oder 4-tert.-octylphenol.

Substituierte Benzophenone wie Bis-(2,4,4-Dihydroxy)benzophenon oder Bis-(2-Hydroxy-4-Methoxy-6-Sulfonato-Benzophenon.

Weitere geeignete UV-Strahlung absorbierende Mittel sind Benztriazole wie 2(2-Hydroxy-3-dodecyl-5-methylphenyl)-benzotriazol.

Die geformten Gebilde aus aromatischen Polyethersulfonen sind erfindungsgemäß vollständig mit einer Schicht eines filmbildenden Polymeren, das ein UV-Strahlung absorbierendes Mittel enthält, umhüllt. Die umhüllende Schicht hat in der Regel eine Schichtdicke von 10 bis 50 $\mu$. Die umhüllende Schicht kann aus einer einzigen Lage oder aus mehreren, z.B. bis zu 3 Lagen aufgebaut sein. Die einzelnen Lagen können aus gleichen filmbildenden Polymeren oder jeweils verschiedenen filmbildenden Polymeren bestehen. Die filmbildende Polymerschicht enthält im allgemeinen 5 bis 40 Gew.-% UV-Strahlung absorbierende Mittel, bezogen auf die umhüllende Polymerschicht. Die umhüllende Polymerschicht kann mehrere UV-Strahlung absorbierende Mittel enthalten. Sofern mehrere Lagen aus filmbildenden Polymeren angewandt werden, können auch in jeder Lage verschiedene UV-Strahlung absorbierende Mittel enthalten sein.

Sofern Fäden und Fasern umhüllt werden, beträgt die umhülllende Schicht im allgemeinen 2 bis 20 Gew.-%, insbesondere 5 bis 15 Gew.-%, bezogen auf das Gewicht der Fäden oder Fasern.

Die erfindungsgemäßen UV-stabilisierten geformten Gebilde aus aromatischen Polyethersulfonen erhält man vorteilhaft in einem Verfahren, bei dem man geformte Gebilde aus aromatischen Polyethersulfonen mit einer gegenüber Polyethersulfonen indifferenten Lösung oder Dispersion eines filmbildenden Polymeren in mindestens ein UV-Strahlung absorbierendes Mittel gelöst und/oder dispergiert enthält, beschichtet und das Lösungsmittel oder Dispergiermittel bei erhöhter Temperatur unter Bildung eines Polymerfilmes entfernt.

Erfindungsgemäß werden Lösungsmittel verwendet, in denen Polyethersulfone unlöslich sind. Geeignete Lösungsmittel sind beispielsweise Alkanole, wie Alkanole mit 1 bis 4 Kohlenstoffatomen oder deren Ester mit niederen Fettsäuren, z.B. mit 1 bis 4 Kohlenstoffatomen, ferner Wasser oder deren Gemische. Das Lösungsmittel richtet sich nach der Löslichkeit der vorgenannten Polymeren in sogenannten Lösungsmitteln. Die vorgenannten filmbildenden Polymeren lassen sich auch als Dispersionen in Wasser anwenden.

Geeignete Lösungen sind beispielsweise Polyvinylalkohol in Wasser, Polyvinylacetat in Alkohol oder Ester, Polymere aus Acrylaten und Copolymere aus Acrylaten und Styrol werden in der Regel als wäßrige Dispersionen angewandt.

Der Gehalt an filmbildenden Polymeren in der Lösung beträgt vorteilhaft 5 bis 20, insbesondere 7 bis 15 Gew.-%. Das Gewichtsverhältnis von filmbildenden Polymeren zu UV-Strahlung absorbierenden Mitteln beträgt vorteilhaft von 2:1 bis 10:1, insbesondere 3:1 bis 8:1.

Filmbildende Polymere sowie UV-Strahlung absorbierende Mittel enthaltende Lösung oder Dispersion wird zweckmäßig durch Tauchen oder Besprühen auf die geformten Gebilde aus aromatischen Polyethersulfonen aufgetragen und eine gleichmäßige Schicht erzeugt. Anschließend wird das Lösungs- oder Dispergiermittel bei erhöhter Temperatur, z.B. von 50 bis 250 °C in Abhängigkeit vom Siedepunkt des Lösungs- oder Dispergiermittels unter Bildung eines Polymerfilms entfernt. Vorteilhaft erfolgt die Beschichtung mehrmals, z.B. ein bis dreimal, wobei für die nachfolgenden Beschichtungen jeweils gleiche oder verschiedene filmbildende Polymere und/oder UV-Strahlung absorbierende Mittel verwendet werden können.

Erfindungsgemäße geformte Gebilde können übliche Zusätze, wie z.B. Farbstoffe, Pigmente, Weißtöner, Aufheller und dgl. in wirksamen Mengen enthalten.

Der Gegenstand der Erfindung sei an folgenden Beispielen veranschaulicht:

Vergleichsbeispiel

Ein Polyethersulfon mit den wiederkehrenden Einheiten

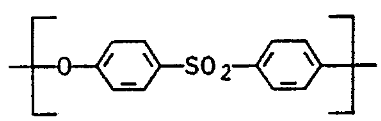

und einer rel. Lösungsviskosität von 1,22, gemessen 1% in NMP bei 25 °C, wurde in an sich bekannter Weise bei einer Schmelzetemperatur von 360 °C zu einem Multifilamentgarn versponnen und bei einer Temperatur von 170 °C auf das 2-fache verstreckt. Die Fäden hatten folgende Eigenschaften:

| | |
|---|---|
| Titer: | 200/20 dtex |
| Reißfestigkeit: | 2 cN/dtex |
| Bruchdehung: | 25% |

Nach 7 Tagen Belichtung im Xenotest 450 war praktisch keine Reißfestigkeit mehr feststellbar.

Beispiel 1

Gemäß Vergleichsbeispiel hergestellte Polyethersulfonfäden wurden kontinuierlich mit einer Lösung beschichtet, die auf 100 g Lösungsmittel Ethanol enthielt:
7 g wäßrige 50%ige Dispersion auf Basis eines Copolymerisates aus Acrylsäureester und Styrol
3 g 2,4,2',4'-Tetrahydroxybenzophenon

Die aufgetragene Schicht nach dem Trocknen bei 100 °C betrug 8 Gew.-%. Eine 7-tägige Belichtung im Xenotest 450 brachte eine Rest-Reißfestigkeit von 80%; die Haftung des Stabilisatorsystems auf der Faser war gut.

Beispiel 2

Gemäß Vergleichsbeispiel hergestellte Polyethersulfonfäden wurden kontinuierlich mit einer Lösung beschichtet, die auf 100 g Ethanol enthielt:
7 g 50%ige Dispersion enthaltend ein Copolymeres aus Acrylsäureester und Styrol in Wasser dispergiert,

1 g 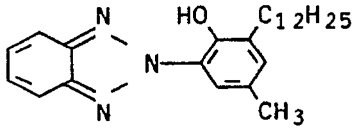

Der Faserauftrag betrug nach dem Trocknen bei 100 °C 7%. Die Faserhaftung der stabilisierenden Schicht war gut; die Rest-Reißfestigkeit nach 7 Tagen Xenotest 450-Behandlung noch 68%.

Beispiel 3

Gemäß Vergleichsbeispiel hergestellte Polyethersulfonfäden, zusätzlich mit 2% eines löslichen grünen Farbstoffs eingefärbt, wurden wie im Beispiel 1 beschrieben, beschichtet und dann 7 Tage belichtet. Die Rest-Reißfestigkeit betrug noch 94%.

Beispiel 4 (erfindungsgemäß)

Gemäß Beispiel 1 hergestellte Polyethersulfonfäden wurden kontinuierlich mit einer Lösung beschichtet, die auf 100 g Ethanol enthielt:
7 g Dispersion eines Copolymeren auf Basis Acrylsäureester und Styrol,

1 g 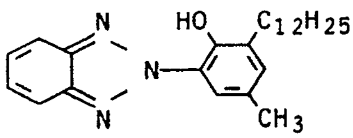

Der Auftrag auf die Fäden betrug nach dem Trocknen bei 100 °C 7 Gew.-%. Die Haftung der stabilisierenden Schicht war gut; die Rest-Reißfestigkeit nach 7 Tagen Xenotest 450-Behandlung noch 68%.

**Patentansprüche**

1. Geformte Gebilde aus aromatischen Polyethersulfonen, die gegen UV-Strahlung stabilisiert sind, dadurch gekennzeichnet, daß sie mit mindestens einem filmbildenden Polymeren mit einem Gehalt an mindestens einem in den filmbildenden Polymeren gelösten und/oder dispergierten UV-Strahlung absorbierenden Mittel beschichtet sind.

2. Geformte Gebilde aus aromatischen Polyethersulfonen nach Anspruch 1, dadurch gekennzeichnet, daß sie aus der Schmelze geformte Fäden, Fasern oder Folien sind.

3. Geformte Gebilde aus aromatischen Polyethersulfonen nach den Ansprüchen 1 und 2, dadurch gekennzeichnet, daß sie mit mindestens einem der Polymeren, Polyvinylalkohol, Polyvinylacetat, Polyvinylpyrrolidon, oder Polyacrylsäureester oder dessen Copolymeren beschichtet sind.

4. Geformte Gebilde aus aromatischen Polyethersulfonen nach den Ansprüchen 1 bis 3, dadurch gekennzeichnet, daß die Schicht aus filmbildenden Polymeren aus 1 bis 3 Lagen besteht.

5. Geformte Gebilde aus aromatischen Polyethersulfonen nach den Ansprüchen 1 bis 4, dadurch gekennzeichnet, daß die Schicht aus filmbildenden Polymeren mindestens ein sterisch gehindertes Phenol, ein Benztriazol oder Hydroxybenzophenon als UV-Strahlung absorbierendes Mittel enthält.

6. Verfahren zur Herstellung von geformten Gebilden aus aromatischen Polyethersulfonen, die gegen UV-Strahlung stabilisiert sind, dadurch gekennzeichnet, daß man geformte Gebilde aus aromatischen Polyethersulfonen mit einer gegenüber Polyethersulfonen indifferenten Lösung oder Dispersion eines filmbildenden Polymeren, die mindestens ein UV-Strahlung absorbierendes Mittel gelöst und/oder dispergiert enthält, beschichtet und das Lösungs- oder Dispergiermittel bei erhöhter Temperatur unter Bildung eines Polymerfilms entfernt.

7. Verfahren nach Anspruch 6, dadurch gekennzeichnet, daß man als Lösungsmittel Alkanole mit 1 bis 4 Kohlenstoffatomen, deren Ester mit niederen Fettsäuren, Wasser oder deren Gemische verwendet.

8. Verfahren nach den Ansprüchen 6 und 7, dadurch gekennzeichnet, daß man 5 bis 20 gew.-%ige Lösungen von filmbildenden Polymeren verwendet.

9. Verfahren nach den Ansprüchen 6 bis 8, dadurch gekennzeichnet, daß man die geformten Gebilde aus aromatischen Polyethersulfonen mindestens einmal in eine Lösung oder Dispersion aus filmbildenden Polymeren, die mindestens ein UV-Strahlung absorbierendes Mittel enthalten, taucht und anschließend durch Entfernen des Lösungs- oder Dispergiermittels durch Erhitzen auf eine Temperatur von bis zu 230 °C einen Polymerfilm auf der Oberfläche erzeugt.